# EUROPÄISCHE PATENTSCHRIFT

(11) **EP 3 020 922 B1**
(45) Veröffentlichungstag und Bekanntmachung des Hinweises auf die Patenterteilung: **12.12.2018**
(21) Anmeldenummer: 15190023.0
(22) Anmeldetag: 15.10.2015
(51) Int. Cl.: F01D 5/16, F04D 29/66, F16F 15/00

(54) **TURBOMASCHINENSCHAUFELANORDNUNG MIT STIMMKÖRPER**
BLADE ASSEMBLY OF A TURBOMACHINE WITH TUNING MASS
SYSTÈME DE PALE DE TURBOMACHINE AVEC ÉLÉMENT AMORTI

(30) Priorität: 13.11.2014 DE 102014223231
(43) Veröffentlichungstag der Anmeldung: 18.05.2016
(73) Patentinhaber: MTU Aero Engines AG, 80995 München (DE)
(72) Erfinder: Hartung, Andreas, 81829 München (DE); Schill, Manfred, 81827 München (DE); Rösele, Gerhard-Heinz, 86551 Aichach (DE)

(56) Entgegenhaltungen:
- EP-A1- 2 966 262
- WO-A1-2012/095067
- DE-A1- 2 435 517
- DE-U1- 7 701 540
- FR-A1- 2 522 364
- GB-A- 2 111 130
- US-A- 2 349 187
- US-A- 4 649 712
- US-A1- 2013 294 913

## Beschreibung

Die Arbeiten, die zu dieser Erfindung geführt haben, wurden gemäß der Finanzhilfevereinbarung Nr. CSJU-GAM-SAGE-2008-001 im Zuge des Siebten Rahmenprogramms der Europäischen Union (FP7/2007-2013) für Clean Sky Joint Technology Initiative gefördert.
Die vorliegende Erfindung betrifft eine Turbomaschinenschaufelanordnung, eine Turbomaschine, insbesondere Gasturbine, mit einer Turbomaschinenschaufelanordnung sowie ein Verfahren zum Herstellen einer Turbomaschinenschaufelanordnung.

Aus der WO 2012/095067 A1 ist eine Turbomaschinenschaufelanordnung mit einer Turbomaschinenschaufel und einem mehrteiligen Stimmkörperführungsgehäuse mit einem Hohlraum bekannt, in dem ein Stimmkörper, der zum Stoßkontakt mit dem Stimmkörperführungsgehäuse vorgesehen ist, aufgenommen ist, wobei das Stimmkörperführungsgehäuse in einer Aussparung der Turbomaschinenschaufel angeordnet ist.
Eine Aufgabe einer Ausführung der vorliegenden Erfindung ist es, eine Turbomaschine zu verbessern.
Diese Aufgabe wird durch eine Turbomaschinenschaufelanordnung mit den Merkmalen des Anspruchs 1 gelöst. Ansprüche 3, 4 stellen eine Turbomaschine mit einer hier beschriebenen Turbomaschinenschaufelanordnung bzw. ein Verfahren zum Herstellen einer hier beschriebenen Turbomaschinenschaufelanordnung unter Schutz. Vorteilhafte Ausführungsformen der Erfindung sind Gegenstand der Unteransprüche.

Nach der vorliegenden Erfindung weist eine Turbomaschinenschaufelanordnung eine Turbomaschinenschaufel und ein oder mehrere Stimmkörperführungsgehäuse mit je einem oder mehreren Hohlräumen auf, in dem jeweils ein oder mehrere Stimmkörper, die zum Stoßkontakt mit dem Stimmkörperführungsgehäuse vorgesehen sind, aufgenommen sind, wobei das bzw. die Stimmkörperführungsgehäuse in je einer Aussparung der Turbomaschinenschaufel angeordnet sind, insbesondere jeweils vollständig bzw. zur Gänze innerhalb der Turbomaschinenschaufel.

In einem oder mehreren Hohlräumen kann jeweils genau ein einzelner Stimmkörper angeordnet sein. Hierdurch können die einzelnen Stoßbedingungen jeweils gezielt auf bestimmte Frequenzen abgestimmt und die Turbomaschinenschaufel entsprechend "verstimmt" werden, wie dies in der eingangs genannten eigenen WO 2012/095067 A1 ausführlich erläutert ist.

Die Turbomaschinenschaufel kann eine Lauf- oder Leitschaufel einer Turbomaschine, insbesondere einer Gasturbine, insbesondere einer Flugtriebwerk-Gasturbine und/oder einer Verdichter- oder Turbinenstufe der Gasturbine sein. Ein oder mehrere der Stimmkörperführungsgehäuse bzw. der Aussparungen können insbesondere jeweils, vorzugsweise vollständig, in einem radial inneren oder radial äußeren Deckband, insbesondere einem Schaufelfuß, oder einem Schaufelblatt der Turbomaschinenschaufel angeordnet sein bzw. werden.

Nach der vorliegenden Erfindung werden bzw. sind wenigstens ein Hohlraum wenigstens eines Stimmkörperführungsgehäuses, in dem wenigstens ein Stimmkörper aufgenommen ist, gasdicht verschlossen, in einer Weiterbildung mehrere, insbesondere alle Hohlräume eines oder mehrerer Stimmkörperführungsgehäuse der Turbomaschinenschaufelanordnung.

Hierdurch können vorteilhaft der bzw. die Stimmkörper und ihre Führungen vor einem Arbeitsgas der Turbomaschine, insbesondere einem Luftstrom einer Verdichterstufe oder einem Abgasstrom einer Turbinenstufe, geschützt und so ihre Wirkung und/oder Lebensdauer verbessert werden.

Ein Stimmkörperführungsgehäuse weist zwei oder mehr Teile, insbesondere einen Grundkörper und einen Deckel, auf, die miteinander verschweißt sind bzw. werden und zusammen einen oder mehrere der gasdicht verschlossenen Hohlräume definieren, insbesondere alle gasdicht verschlossenen Hohlräume des Stimmkörperführungsgehäuses. Durch ein Verschweißen kann, insbesondere gegenüber einem Löten oder Kleben, eine höhere Lebensdauer des Stimmkörperführungsgehäuses, insbesondere der Gasdichtigkeit, erreicht werden. Insbesondere, um das Schweißen zu verbessern, sind in einer Ausführung ein oder mehrere Teile des Stimmkörperführungsgehäuses aus Haynes 230, Hastelloy X oder dergleichen. In einer Ausführung werden bzw. sind ein oder mehrere der Stimmkörperführungsgehäuse stoffschlüssig mit der Turbomaschinenschaufel verbunden, insbesondere verlötet. Dies kann insbesondere dann zweckmäßig sein, wenn eine Auslegungs-Lebensdauer des Stimmkörperführungsgehäuses über einer Auslegungs-Lebensdauer der Turbomaschinenschaufel liegt. Da die Hohlräume bereits, insbesondere durch Verschweißen des mehrteiligen Stimmkörperführungsgehäuses, gasdicht sind, kann das Stimmkörperführungsgehäuse seinerseits auch nicht (dauerhaft) gasdicht in der Aussparung der Turbomaschinenschaufel befestigt werden bzw. sein, insbesondere durch Verlöten, was insbesondere bei nicht bzw. schlecht schweißbarem Turbomaschinenschaufelmaterial vorteilhaft sein kann.

Nach der vorliegenden Erfindung werden bzw. sind ein oder mehrere der Stimmkörperführungsgehäuse durch ein Sicherungsblech in der jeweiligen Aussparung, insbesondere form- und/oder reibschlüssig, befestigt. Dies kann insbesondere dann zweckmäßig sein, wenn eine Auslegungs-Lebensdauer der Turbomaschinenschaufel über einer Auslegungs-Lebensdauer des Stimmkörperführungsgehäuses liegt und dieses daher ein- oder mehrfach ausgetauscht werden soll. Entsprechend werden bzw. sind in einer Ausführung das bzw. die Stimmkörperführungsgehäuse ohne Stoffschluss mit der jeweiligen Aussparung in dieser befestigt.

Nach der vorliegenden Erfindung wird bzw. ist ein Stimmkörperführungsgehäuse durch ein Sicherungsblech in einer Aussparung befestigt, indem zunächst sequentiell bzw. nacheinander das Stimmkörperführungsgehäuse und anschließend oder vorher das Sicherungsblech durch eine Einführöffnung der Aussparung in die Aussparung eingeführt und in einer Weiterbildung anschließend das Stimmkörperführungsgehäuse und das Sicherungsblech in der Aussparung miteinander verbunden werden, wobei die Einführöffnung, insbesondere ihre Kontur, derart ausgebildet ist, dass sie das sequentielle Einführen des Stimmkörperführungsgehäuses und des Sicherungsblechs gestattet, aber ein Ausführen des Sicherungsblechs zusammen mit dem, insbesondere mit diesem verbundenen, Stimmkörperführungsgehäuse formschlüssig verhindert. Mit anderen Worten werden bzw. sind in einer Ausführung das Stimmkörperführungsgehäuse und das Sicherungsblech in der Aussparung miteinander zu einer Baueinheit verbunden, deren Außenabmessung größer als die Einführöffnung ist, so dass diese ein Ausführen der Baueinheit formschlüssig verhindert und so Stimmkörperführungsgehäuse und Sicherungsblech in der Aussparung befestigt bzw. mit oder ohne Bewegungsspiel festlegt. Zusätzlich oder alternativ kann auch das Sicherungsblech nach dem Stimmkörperführungsgehäuse in die Aussparung eingeführt und in dieser, insbesondere reib- oder formschlüssig, befestigt sein bzw. werden. Ist nun die Einführöffnung, insbesondere ihre Kontur, derart ausgebildet, dass sie ein solches sequentielles Einführen des Stimmkörperführungsgehäuses und des Sicherungsblechs gestattet, aber ein Ausführen des Sicherungsblechs zusammen bzw. gemeinsam mit dem Stimmkörperführungsgehäuse formschlüssig verhindert, verhindert das in der Aussparung befestigte Sicherungsblech vorteilhaft auch ein Ausführen des Stimmkörperführungsgehäuses, auch wenn dieses nicht mit dem Sicherungsblech verbunden ist bzw. wird.

Ein Stimmkörperführungsgehäuse kann durch ein Sicherungsblech in einer Aussparung befestigt werden bzw. sein, indem das Sicherungsblech in der Aussparung reib- und/oder formschlüssig, insbesondere durch eine oder mehrere umgebogene Laschen des Sicherungsblechs, befestigt und Sicherungsblech und Stimmkörperführungsgehäuse vorab, dabei oder anschließend miteinander verbunden werden bzw. sind. Mit anderen Worten wird bzw. ist in einer Ausführung das Sicherungsblech einerseits mit dem Stimmkörperführungsgehäuse verbunden und andererseits in der Aussparung mit oder ohne Bewegungsspiel festlegt.
In einer Weiterbildung wird bzw. ist das Sicherungsblech, insbesondere durch die umgebogene(n) Lasche(n), in der Aussparung verdrehgesichert. Hierdurch kann es in einer Ausführung, insbesondere zusammen mit dem Stimmkörperführungsgehäuse oder vorab, durch eine Drehbewegung in die Aussparung eingeführt und anschließend in dieser befestigt bzw. mit oder ohne Bewegungsspiel festlegt werden. In einer Weiterbildung weist das Sicherungsblech hierzu wenigstens abschnittsweise eine Kreiskontur auf, um die Drehbewegung zu erleichtern, insbesondere formschlüssig zu führen.

Nach der vorliegenden Erfindung wird bzw. ist ein Sicherungsblech mit einem Stimmkörperführungsgehäuse formschlüssig, insbesondere durch eine oder mehrere umgebogene Laschen des Sicherungsblechs, verbunden. Alternativ wird bzw. ist das Sicherungsblech mit dem Stimmkörperführungsgehäuse reibschlüssig, insbesondere durch eine oder mehrere umgebogene Laschen des Sicherungsblechs, verbunden.

Alternativ wird bzw. ist ein Sicherungsblech mit einem Stimmkörperführungsgehäuse stoffschlüssig verbunden, insbesondere verlötet oder verschweißt. Insbesondere, um das Stimmkörperführungsgehäuse aus der Aussparung der Turbomaschinenschaufel zu entfernen, kann dieser Stoffschluss in einer Ausführung getrennt werden, insbesondere, wenn miteinander stoffschlüssig zu einer Baueinheit verbundenes Sicherungsblech und Stimmkörperführungsgehäuse nicht gemeinsam aus einer Einführöffnung der Aussparung ausgeführt werden können. Gleichermaßen können zu einer Baueinheit verbundenes Sicherungsblech und Stimmkörperführungsgehäuse auch als Baueinheit aus der Aussparung entfernt werden, indem, beispielsweise durch Rückbiegen einer oder mehrerer umgebogener Laschen des Sicherungsblechs, dessen Befestigung in der Aussparung gelöst wird.
In einer Ausführung wird bzw. ist das Sicherungsblech durch das mit ihm verbundene Stimmkörperführungsgehäuse in der Aussparung elastisch deformiert und/oder reibschlüssig gegen die Aussparung gespannt. In einer Weiterbildung werden bzw. sind zwei Schenkel eines U-Förmigen Sicherungsblechs durch das in dessen Nut zwischen den Schenkeln eingeführte Stimmkörperführungsgehäuse in der Aussparung elastisch verspreizt.

Nach dem Verfahren der vorliegenden Erfindung werden ein oder mehrere Stimmkörper, insbesondere jeweils einzeln bzw. allein, in einem Hohlraum eines Stimmkörperführungsgehäuses angeordnet, dieser, insbesondere durch Verschweißen von zwei oder mehr Teilen des Stimmkörperführungsgehäuses, gasdicht verschlossen, und das Stimmkörperführungsgehäuse, insbesondere anschließend, in einer Aussparung der Turbomaschinenschaufel angeordnet.

Im Weiteren wird das Stimmkörperführungsgehäuse und, insbesondere vorab, gemeinsam oder anschließend, ein Sicherungsblech in der Aussparung angeordnet und in dieser, insbesondere durch Umbiegen einer oder mehrerer Laschen des Sicherungsblechs, form- und/oder reibschlüssig befestigt. Zusätzlich oder alternativ wird in einer Ausführung das Sicherungsblech durch eine Einführöffnung der Aussparung eingeführt und in der Aussparung durch, insbesondere reib-, form- oder stoffschlüssiges, Verbinden mit dem Stimmkörperführungsgehäuse befestigt. Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1A: ein Einführen eines Stimmkörperführungsgehäuses in eine Aussparung einer Turbomaschinenschaufel einer Turbomaschinenschaufelanordnung einer Turbomaschine nach einer Ausführung der vorliegenden Erfindung in einem Schnitt;
- Fig. 1B: das in die Aussparung eingeführte und durch ein Sicherungsblech in dieser befestigte Stimmkörperführungsgehäuse;
- Fig. 2A: eine Turbomaschinenschaufelanordnung einer Turbomaschine nach einer weiteren Ausführung der vorliegenden Erfindung in einer Draufsicht auf eine Einführöffnung;
- Fig. 2B: einen Schnitt längs der Linie B-B in Fig. 2A;
- Fig. 3A: eine Turbomaschinenschaufelanordnung einer Turbomaschine nach einer weiteren Ausführung der vorliegenden Erfindung in einer Draufsicht auf eine Einführöffnung;
- Fig. 3B: einen Schnitt längs der Linie B-B in Fig. 3A;
- Fig. 4A: eine Turbomaschinenschaufelanordnung einer Turbomaschine nach einer weiteren Ausführung der vorliegenden Erfindung in einer Draufsicht auf eine Einführöffnung;
- Fig. 4B: einen Schnitt längs der Linie B-B in Fig. 4A;
- Fig. 5: einen Schnitt durch eine Turbomaschinenschaufelanordnung einer Turbomaschine nach einer weiteren Ausführung der vorliegenden Erfindung;
- Fig. 6A: eine Turbomaschinenschaufelanordnung einer Turbomaschine nach einer weiteren Ausführung, die das Verständnis der Erfindung erleichtert, nicht jedoch Teil der Erfindung ist;
- Fig. 6B: einen Schnitt längs der Linie B-B in Fig. 6A;
- Fig. 6C: einen Schnitt längs der Linie C-C in Fig. 6A
- Fig. 6D: einen Schnitt längs der Linie D-D in Fig. 6B
- Fig. 6E: den Schnitt der Fig. 6D während eines Anordnens eines Sicherungsbleches; und
- Fig. 6F: einen Schnitt längs der Linie F-F in Fig. 6D.

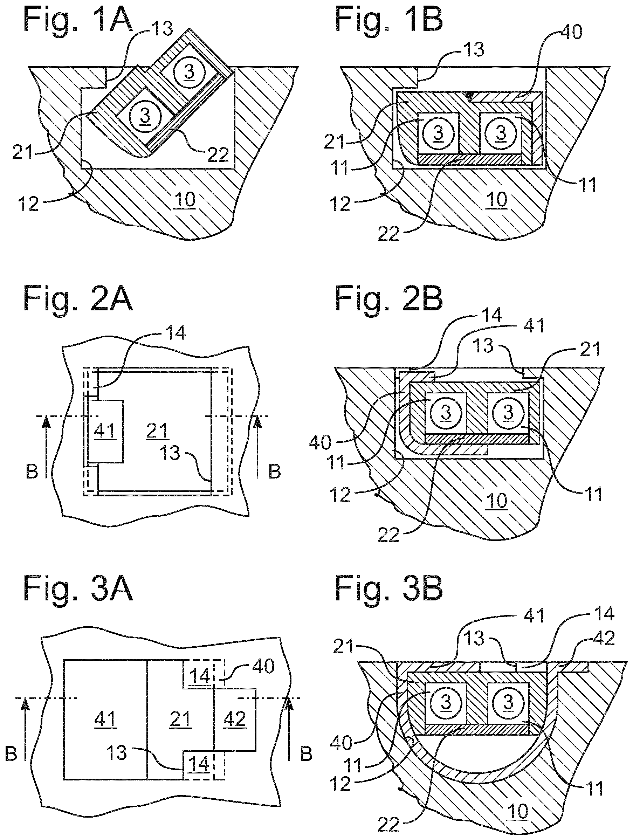

Fig. 1B zeigt in einem Schnitt einen Teil einer Turbomaschinenschaufelanordnung einer Turbomaschine nach einer Ausführung der vorliegenden Erfindung mit einer Turbomaschinenschaufel 10 und einem zweiteiligen Stimmkörperführungsgehäuse 21, 22 mit mehreren Hohlräumen 11, in denen jeweils ein einzelner Stimmkörper 3 aufgenommen ist, der zum Stoßkontakt mit dem Stimmkörperführungsgehäuse vorgesehen ist.

Das Stimmkörperführungsgehäuse weist einen Grundkörper 21 und einen Deckel 22 auf, die miteinander verschweißt sind und zusammen die Hohlräume definieren, die hierdurch gasdicht verschlossen sind.

Das Stimmkörperführungsgehäuse 21, 22 wird bzw. ist vollständig in einer Aussparung 12 der Turbomaschinenschaufel angeordnet und darin durch ein Sicherungsblech 40 formschlüssig mit Bewegungsspiel festgelegt.

Hierzu wird zunächst, wie in Fig. 1A angedeutet, das Stimmkörperführungsgehäuse 21, 22 durch eine Einführöffnung 13 der Aussparung 12 in diese eingeführt. Anschließend wird das Sicherungsblech 40 durch die Einführöffnung 13 eingeführt und mit dem Stimmkörperführungsgehäuse 21, 22 durch Schweißen stoffschlüssig zu einer Baueinheit verbunden, wie in Fig. 1B durch eine Schweißnaht angedeutet.

Die Einführöffnung 13 ist derart ausgebildet, insbesondere bemessen, dass sie dieses sequentielle Einführen des Stimmkörperführungsgehäuses 21, 22 und des Sicherungsblechs 40 gestattet, aber ein Ausführen des Sicherungsblechs zusammen mit dem mit diesem verschweißten Stimmkörperführungsgehäuse formschlüssig verhindert, da eine Außenabmessung von miteinander zu einer Baueinheit verbundenem Stimmkörperführungsgehäuse 21, 22 und Sicherungsblech 40 größer ist als die Einführöffnung 13.

Um das Stimmkörperführungsgehäuse 21, 22 aus der Aussparung 12 der Turbomaschinenschaufel 10 zu entfernen, kann diese Schweißnaht getrennt werden.

Fig. 2A zeigt eine Turbomaschinenschaufelanordnung einer Turbomaschine nach einer weiteren Ausführung der vorliegenden Erfindung in einer Draufsicht auf eine Einführöffnung 13, Fig. 2B einen Schnitt längs der Linie B-B in Fig. 2A. Einander entsprechende Merkmale sind durch identische Bezugszeichen identifiziert, so dass auf die übrige Beschreibung Bezug genommen und nachfolgend nur auf Unterschiede eingegangen wird.

In der Ausführung der Fig. 2 werden bzw. sind das Stimmkörperführungsgehäuse 21, 22 und das Sicherungsblech 40 miteinander formschlüssig zu einer Baueinheit verbunden, indem nach dem sequentiellen Einführen von Sicherungsblech 40 und anschließend Stimmkörperführungsgehäuse 21, 22 durch die Einführöffnung 13 in die Aussparung 12 eine Lasche 41 des Sicherungsblechs 40 umgebogen wird. Die Einführöffnung 13 weist Vorsprünge bzw. Anschläge 14 auf, die die Baueinheit von miteinander formschlüssig zu einer Baueinheit verbundenem Stimmkörperführungsgehäuse 21, 22 und Sicherungsblech 40 formschlüssig mit Bewegungsspiel in der Aussparung 12 festlegen.

Um das Stimmkörperführungsgehäuse 21, 22 aus der Aussparung 12 der Turbomaschinenschaufel 10 zu entfernen, kann die Lasche 41 zurückgebogen und dann zunächst das Stimmkörperführungsgehäuse 21, 22 und anschließend das Sicherungsblech 40 aus der Aussparung 12 entfernt werden.

Fig. 3A zeigt in Fig. 2A entsprechender Weise eine Turbomaschinenschaufelanordnung einer Turbomaschine nach einer weiteren Ausführung der vorliegenden Erfindung in einer Draufsicht auf eine Einführöffnung 13, Fig. 3B in Fig. 2B entsprechender Weise einen Schnitt längs der Linie B-B in Fig. 3A. Einander entsprechende Merkmale sind wiederum durch identische Bezugszeichen identifiziert, so dass auf die übrige Beschreibung Bezug genommen und nachfolgend nur auf Unterschiede eingegangen wird.

In der Ausführung der Fig. 3 können Stimmkörperführungsgehäuse 21, 22 und Sicherungsblech 40 vorab miteinander verschweißt sein bzw. werden. Zusätzlich oder alternativ sind bzw. werden Stimmkörperführungsgehäuse 21, 22 und Sicherungsblech 40 miteinander formschlüssig durch eine umgebogene Lasche 41 des Sicherungsblechs 40 verbunden.

Diese Baueinheit aus Stimmkörperführungsgehäuse 21, 22 und Sicherungsblech 40 wird durch eine Drehbewegung in die Aussparung der Turbomaschinenschaufel 10 eingeführt, bis Vorsprünge bzw. Anschläge 14 der Einführöffnung diese begrenzen. Dann wird eine weitere Lasche 42 des Sicherungsblechs 40 zwischen den Vorsprüngen bzw. Anschlägen 14 umgebogen und hierdurch das Sicherungsblech 40 bzw. die Baueinheit aus Stimmkörperführungsgehäuse 21, 22 und Sicherungsblech 40 formschlüssig in der Aussparung 12 verdrehgesichert und so in dieser befestigt.

Die Baueinheit aus Sicherungsblech 40 und Stimmkörperführungsgehäuse 21, 22 kann aus der Aussparung 12 entfernt werden, indem durch Rückbiegen der Lasche 42 des Sicherungsblechs 40 dessen Befestigung in der Aussparung 12 gelöst wird.

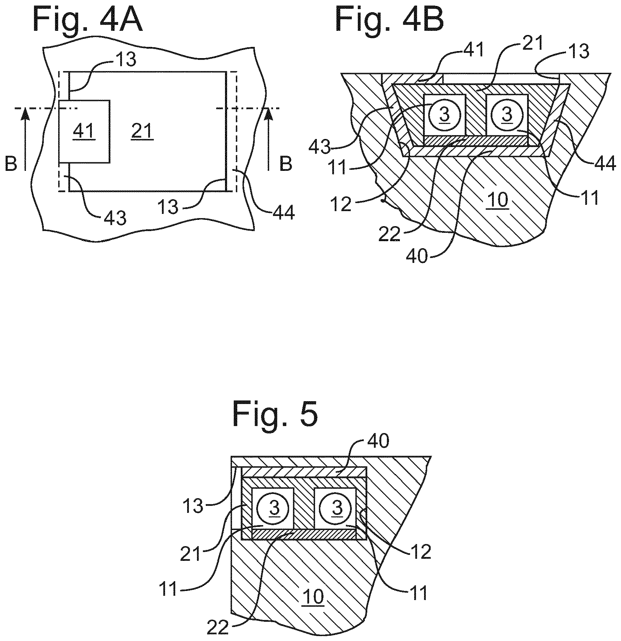

Fig. 4A zeigt in Fig. 2A, 3A entsprechender Weise eine Turbomaschinenschaufelanordnung einer Turbomaschine nach einer weiteren Ausführung der vorliegenden Erfindung in einer Draufsicht auf eine Einführöffnung 13, Fig. 4B in Fig. 2B, 3B entsprechender Weise einen Schnitt längs der Linie B-B in Fig. 4A. Einander entsprechende Merkmale sind wiederum durch identische Bezugszeichen identifiziert, so dass auf die übrige Beschreibung Bezug genommen und nachfolgend nur auf Unterschiede eingegangen wird.

In der Ausführung der Fig. 4 sind bzw. werden zwei Schenkel 43, 44 des U-förmigen Sicherungsblechs 40 durch das hierzu vorteilhaft keilförmig ausgebildete und in die durch die Schenkel 43, 44 definierte Nut eingeführte Stimmkörperführungsgehäuse 21, 22 in der Aussparung 12 elastisch verspreizt. Dadurch werden sie zum einen reibschlüssig gegen die Aussparung gespannt. Zum anderen hintergreifen sie so die Einführöffnung 13, so dass das Sicherungsblechs 40, welches durch das mit ihm verbundene Stimmkörperführungsgehäuse 21, 22 aufgespreizt ist, auch formschlüssig in der Aussparung 12 festgelegt ist, da deren Einführöffnung ein Ausführen des Sicherungsblechs 40 zusammen mit dem mit diesem verbundenen Stimmkörperführungsgehäuse 21, 22 formschlüssig verhindert. Das Stimmkörperführungsgehäuse 21, 22 ist zusätzlich zu dem Reibschluss durch die umgebogene Lasche 41 des Sicherungsblechs 40 formschlüssig mit dem Sicherungsblech 40 verbunden.
Fig. 5 zeigt einen Schnitt durch eine Turbomaschinenschaufelanordnung einer Turbomaschine nach einer weiteren Ausführung der vorliegenden Erfindung. Einander entsprechende Merkmale sind wiederum durch identische Bezugszeichen identifiziert, so dass auf die übrige Beschreibung Bezug genommen und nachfolgend nur auf Unterschiede eingegangen wird.
In der Ausführung der Fig. 5 wird zunächst das Stimmkörperführungsgehäuse 21, 22 durch die Einführöffnung 13 in die Aussparung 12 eingeführt und in dieser abgesenkt. Anschließend wird das Sicherungsblech 40 durch die Einführöffnung 13 in die Aussparung 12 eingeführt und in dieser reibschlüssig und/oder formschlüssig, etwa durch eine oder mehrere umgebogene Laschen (nicht dargestellt) befestigt. Die Einführöffnung 13 ist derart ausgebildet, dass Stimmkörperführungsgehäuse 21, 22 und Sicherungsblech 40 nicht gemeinsam ausgeführt werden können. Da das Sicherungsblech 40 in der Aussparung 12 befestigt ist, verhindert dies auch ein Ausführen des Stimmkörperführungsgehäuses 21, 22 durch die Einführöffnung 13.

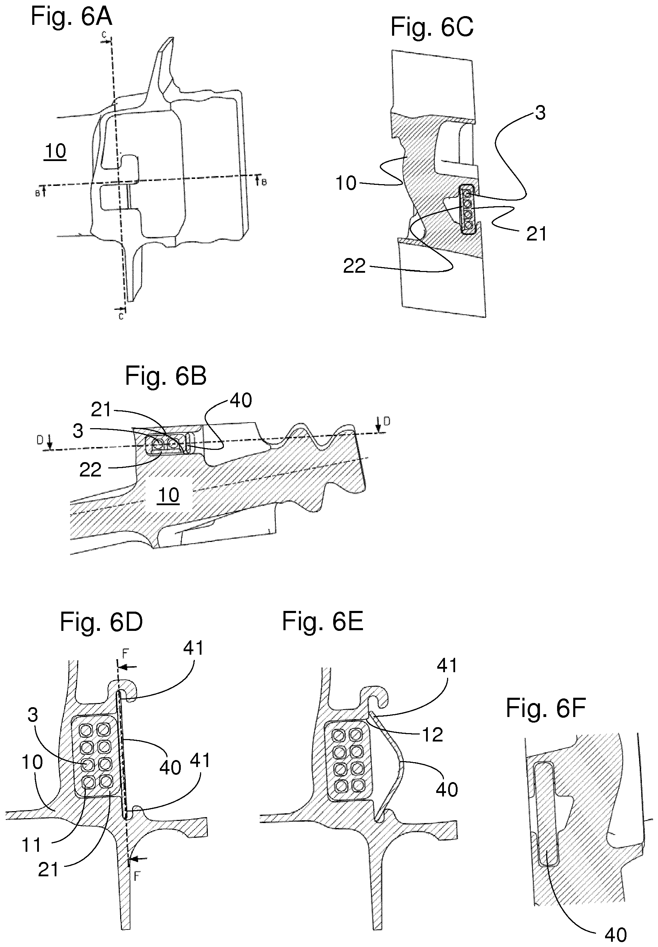

Fig. 6A-6F zeigen Schnitte durch eine Turbomaschinenschaufelanordnung einer Turbomaschine nach einer weiteren Ausführung, die das Verständnis der Erfindung erleichtert, nicht jedoch Teil der Erfindung ist. Einander entsprechende Merkmale sind wiederum durch identische Bezugszeichen identifiziert, so dass auf die übrige Beschreibung Bezug genommen und nachfolgend nur auf Unterschiede eingegangen wird.
In der Ausführung der Fig. 6 weist das zweiteilige Stimmkörperführungsgehäuse mit dem Grundkörper 21 und dem damit verschweißten Deckel 22 acht gasdicht verschlossene Hohlräume 11 auf, in denen jeweils ein einzelner Stimmkörper 3 aufgenommen ist, der zum Stoßkontakt mit dem Stimmkörperführungsgehäuse vorgesehen ist.
Das Stimmkörperführungsgehäuse 21, 22 ist in einer Aussparung 12 in einem Innendeckband der Turbomaschinenschaufel 10 aufgenommen und durch ein Sicherungsblech 40 formschlüssig befestigt. Hierzu werden bzw. sind gegenüberliegende Laschen 41 des Sicherungsblechs 40 durch Umbiegen in Hinterschneidungen der Aussparung 12 eingeführt und dort formschlüssig befestigt, wie insbesondere aus der Figurenfolge Fig. 6E → Fig. 6D und den Schnitten Fig. 6D, Fig. 6F erkennbar.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Turbomaschinenschaufel
- 11: Hohlraum
- 12: Aussparung
- 13: Einführöffnung
- 14: Vorsprung bzw. Anschlag
- 21: Stimmkörperführungsgehäuse-Grundkörper
- 22: Stimmkörperführungsgehäuse-Deckel
- 3: Stimmkörper
- 40: Sicherungsblech
- 41, 42: umgebogene Lasche
- 43, 44: Schenkel

## Patentansprüche

1. Turbomaschinenschaufelanordnung mit einer Turbomaschinenschaufel (10) und wenigstens einem Stimmkörperführungsgehäuse (21, 22) mit wenigstens einem Hohlraum (11), in dem wenigstens ein Stimmkörper (3), der zum Stoßkontakt mit dem Stimmkörperführungsgehäuse vorgesehen ist, aufgenommen ist, wobei das Stimmkörperführungsgehäuse in einer Aussparung (12) der Turbomaschinenschaufel angeordnet ist,
wobei der Hohlraum (11) des Stimmkörperführungsgehäuses (21, 22), in dem der Stimmkörper (3) aufgenommen ist, gasdicht verschlossen ist,
**dadurch gekennzeichnet, dass** das Stimmkörperführungsgehäuse wenigstens zwei Teile (21, 22) aufweist, die miteinander verschweißt sind und den gasdicht verschlossenen Hohlraum (11) definieren,
ferner **gekennzeichnet durch** ein Sicherungsblech (40), durch das das Stimmkörperführungsgehäuse (21, 22) in der Aussparung (12) befestigt ist,
wobei das Sicherungsblech (40) mit dem Stimmkörperführungsgehäuse (21, 22) formschlüssig, insbesondere durch wenigstens eine umgebogene Lasche (41), oder reibschlüssig oder stoffschlüssig verbunden ist, insbesondere verlötet oder verschweißt ist,
wobei die Aussparung (12) eine Einführöffnung (13) aufweist, die ein sequentielles Einführen des Stimmkörperführungsgehäuses (21, 22) und des Sicherungsblechs (40) gestattet und ein Ausführen des Sicherungsblechs zusammen mit dem mit diesem verbundenen Stimmkörperführungsgehäuse formschlüssig verhindert.

2. Turbomaschinenschaufelanordnung nach Anspruch 1, **dadurch gekennzeichnet, dass** das Sicherungsblech (40) durch das mit diesem verbundenen Stimmkörperführungsgehäuse (21, 22) elastisch deformiert und/oder reibschlüssig gegen die Aussparung (12) gespannt ist.

3. Turbomaschine, insbesondere Gasturbine, mit wenigstens einer Turbomaschinenschaufelanordnung nach einem der vorhergehenden Ansprüche.

4. Verfahren zum Herstellen einer Turbomaschinenschaufelanordnung, wobei eine Turbomaschinenschaufelanordnung nach einem der vorhergehenden Ansprüche hergestellt wird, dadurch dass der wenigstens eine Stimmkörper (3) in dem Hohlraum (11) des wenigstens einen Stimmkörperführungsgehäuses (21, 22) angeordnet wird, der Hohlraum (11) durch Verschweißen der wenigstens zwei Teile (21, 22) des Stimmkörperführungsgehäuses gasdicht verschlossen wird, und das Stimmkörperführungsgehäuse in der Aussparung (12) der Turbomaschinenschaufel (10) angeordnet wird, wobei das Sicherungsblech (40) durch eine Einführöffnung (13) der Aussparung (12) eingeführt wird und in der Aussparung durch reib-, form-oder stoffschlüssiges Verbinden mit dem Stimmkörperführungsgehäuse (21, 22) befestigt wird.

5. Verfahren nach dem vorhergehenden Anspruch, **dadurch gekennzeichnet, dass** das Sicherungsblech (40) in der Aussparung (12) angeordnet und in dieser, insbesondere durch Umbiegen einer Lasche (42), form- und/oder reibschlüssig befestigt wird.

## Claims

1. Turbomachine blade assembly comprising a turbomachine blade (10) and at least one tuning element guide housing (21, 22) that has at least one cavity (11) in which at least one tuning element (3) is accommodated for abutting contact with the tuning element guide housing, the tuning element guide housing being arranged in a recess (12) in the turbomachine blade, the cavity (11) in the tuning element guide housing (21, 22) in which the tuning element (3) is accommodated being sealed in a gas-tight manner,
**characterized in that** the tuning element guide housing has at least two parts (21, 22) that are welded together and define the cavity (11) that is sealed in a gas-tight manner,
further **characterized by** a locking plate (40) by means of which the tuning element guide housing (21, 22) is secured in the recess (12), the locking plate (40) being form-fittingly connected, in particular by means of at least one folded tab (41), to the tuning element guide housing (21, 22), or being frictionally connected thereto or integrally bonded therewith, in particular soldered or welded,
the recess (12) having an insertion opening (13) which allows sequential insertion of the tuning element guide housing (21, 22) and the locking plate (40) and form-fittingly prevents removal of the locking plate together with the tuning element guide housing connected thereto.

2. Turbomachine blade assembly according to claim 1,
**characterized in that** the locking plate (40) is elastically deformed and/or frictionally tensioned against the recess (12) by the tuning element guide housing (21, 22) connected to said plate.

3. Turbomachine, in particular a gas turbine, comprising at least one turbomachine blade assembly according to either of the preceding claims.

4. Method for producing a turbomachine blade assembly, wherein a turbomachine blade assembly according to any of the preceding claims is produced, in that the at least one tuning element (3) is arranged in the cavity (11) in the at least one tuning element guide housing (21, 22), the cavity (11) is sealed in a gas-tight manner by welding the at least two parts (21, 22) of the tuning element guide housing, and the tuning element guide housing is arranged in the recess (12) in the turbomachine blade (10), wherein the locking plate (40) is inserted through an insertion opening (13) in the recess (12) and is secured in the recess by frictional or form-fitting connection to or integral bonding with the tuning element guide housing (21, 22).

5. Method according to the preceding claim, **characterized in that** the locking plate (40) is arranged in the recess (12) and is form-fittingly and/or frictionally secured therein, in particular by folding a tab (42).

## Revendications

1. Système de pale de turbomachine avec une pale de turbomachine (10) et au moins un carter de conduite d'élément amorti (21, 22) avec au moins une cavité (11) dans laquelle au moins un élément amorti (3) prévu pour le contact par impact avec le carter de conduite d'élément amorti est incorporé, dans lequel le carter de conduite d'élément amorti est disposé dans une encoche (12) de la pale de turbomachine,
dans lequel la cavité (11) du carter de conduite d'élément amorti (21, 22) dans lequel l'élément amorti (3) est incorporé est obturée de manière à être étanche au gaz, **caractérisé en ce que** le carter de conduite d'élément amorti présente au moins deux parties (21, 22) qui sont soudées entre elles et définissent la cavité (11) obturée de manière à être étanche au gaz,
**caractérisé en outre par** une plaque de verrouillage (40) à travers laquelle le carter de conduite d'élément amorti (21, 22) est fixé dans l'encoche (12),
dans lequel la plaque de verrouillage (40) est reliée avec le carter de conduite d'élément amorti (21, 22) par liaison de forme, en particulier par au moins une languette recourbée (41), ou par liaison par friction, ou par liaison de matière, en particulier brasée ou soudée, dans lequel l'encoche (12) présente une ouverture d'introduction (13) qui permet une introduction séquentielle du carter de conduite d'élément amorti (21, 22) et de la plaque de verrouillage (40) et empêche par liaison de forme une sortie de la plaque de verrouillage avec le carter de conduite d'élément amorti relié avec celui-ci.

2. Système de pale de turbomachine selon la revendication 1, **caractérisé en ce que** la plaque de verrouillage (40) est déformée élastiquement par le carter de conduite d'élément amorti (21, 22) relié avec celui-ci et/ou est tendue par liaison par friction contre l'encoche (12).

3. Turbomachine, en particulier turbine à gaz, avec au moins un système de pale de turbomachine selon l'une des revendications précédentes.

4. Procédé de production d'un système de pale de turbomachine, dans lequel un système de pale de turbomachine est produit selon l'une des revendications précédentes, en ce que l'au moins un élément amorti (3) est disposé dans la cavité (11) de l'au moins un carter de conduite d'élément amorti (21, 22), que la cavité (11) est obturée de manière à être étanche au gaz par soudure des au moins deux parties (21, 22) du carter de conduite d'élément amorti, et que le carter de conduite d'élément amorti est disposé dans l'encoche (12) de la pale de turbomachine,
dans lequel la plaque de verrouillage (40) est introduite par une ouverture d'introduction (13) de l'encoche (12) et fixée dans l'encoche par liaison par friction, de forme ou de matière avec le carter de conduite d'élément amorti (21, 22).

5. Procédé selon la revendication précédente, **caractérisé en ce que** la plaque de verrouillage (40) est disposée dans l'encoche (12) et fixée dans celle-ci par liaison de forme et/ou par friction, en particulier par recourbement d'une languette (42).
